# EUROPÄISCHE PATENTSCHRIFT

(11) **EP 2 879 903 B1**
(45) Veröffentlichungstag und Bekanntmachung des Hinweises auf die Patenterteilung: **17.10.2018**
(21) Anmeldenummer: 13740032.1
(22) Anmeldetag: 25.07.2013
(51) Int. Cl.: B60N 2/015, B60N 2/20, B60N 2/22, B60N 2/30, B60N 2/36

(54) **VERSTELLBARER FAHRZEUGSITZ**
ADJUSTABLE VEHICLE SEAT
SIÈGE RÉGLABLE DE VÉHICULE

(30) Priorität: 31.07.2012 DE 102012015287
(43) Veröffentlichungstag der Anmeldung: 10.06.2015
(73) Patentinhaber: Adient Luxembourg Holding S.à r.l., 1855 Luxembourg (LU)
(72) Erfinder: ROTHSTEIN, Gerhard, 42553 Velbert (DE); FAHL, Michael, 51491 Overath (DE)
(74) Vertreter: Liedhegener, Ralf
(86) Internationale Anmeldenummer: PCT/EP2013/065722
(87) Internationale Veröffentlichungsnummer: WO 2014/019931

(56) Entgegenhaltungen:
- WO-A1-2004/069585
- DE-B3-102004 041 449
- US-A1- 2005 023 857

## Beschreibung

Die Erfindung betrifft einen verstellbaren Fahrzeugsitz mit den Merkmalen des Oberbegriffs des Anspruchs 1.

### Stand der Technik

Durch Benutzung bekannt sind verstellbare Fahrzeugsitze, welche ein Sitzteil und eine schwenkbar an dem Sitzteil angeordnete Rückenlehne aufweisen. Dazu weist ein solcher Fahrzeugsitz zwei Lehneneinstellbeschläge auf, mittels welchen die Rückenlehne relativ zu dem Sitzteil um eine Lehnenschwenkachse schwenkbar ist, und mittels welchen die Rückenlehne mit dem Sitzteil in mehreren Winkelpositionen verriegelbar ist.

Ausgehend von einer einsitzbaren Design-Position, in welcher die Rückenlehne annähernd senkrecht steht, ist der Fahrzeugsitz in eine Tisch-Position überführbar, in welcher die Rückenlehne auf dem Sitzteil aufliegt. Die Rückseite der Rückenlehne liegt dabei annähernd waagerecht und der Fahrzeugsitz hat die Funktion eines Tisches.

Ferner ist bekannt, dass der Fahrzeugsitz mittels zweier Verriegelungsvorrichtungen, welche im hinteren Bereich des Sitzteils angebracht sind, mit der Fahrzeugstruktur verriegelbar ist. Durch Entriegeln der beiden besagten Verriegelungsvorrichtungen ist der hintere Teil des Fahrzeugsitz von der Fahrzeugstruktur lösbar. Durch Anheben des hinteren Teils des Fahrzeugsitzes und Schwenken nach vorne ist der Fahrzeugsitz in eine Tumble-Position überführbar, in welcher zusätzlicher Laderaum geschaffen ist.

Aus der US 2005/023857 A1 ist verstellbarer Fahrzeugsitz bekannt, umfassend ein Sitzteil und eine Rückenlehne, welche mittels mindestens eines Lehneneinstellbeschlags relativ zu dem Sitzteil um eine Lehnenschwenkachse schwenkbar und in mehreren Winkelpositionen verriegelbar ist. Der Fahrzeugsitz weist eine Verriegelungsvorrichtung, mittels welcher das Sitzteil mit einer Fahrzeugstruktur verriegelbar ist, und ein Entriegelungshebel auf, welcher eine eingeleitete Bewegung zur Entriegelung an die mindestens eine Verriegelungsvorrichtung überträgt.

### Aufgabe

Der Erfindung liegt die Aufgabe zu Grunde, einen Fahrzeugsitz der eingangs genannten Art zu verbessern, insbesondere eine gleichzeitige Entriegelung der Verriegelungsvorrichtungen und der Lehneneinstellbeschläge zu verhindern.

### Lösung

Diese Aufgabe wird erfindungsgemäß durch einen Fahrzeugsitz mit den im Anspruch 1 genannten Merkmalen gelöst. Vorteilhafte Ausgestaltungen, welche einzeln oder in Kombination miteinander eingesetzt werden können, insofern sie innerhalb des durch die Ansprüche definierten Schutzes bleiben, sind Gegenstand der Unteransprüche.

Ein erfindungsgemäßer verstellbarer Fahrzeugsitz umfasst ein Sitzteil und eine Rückenlehne, welche mittels mindestens eines Lehneneinstellbeschlags relativ zu dem Sitzteil um eine Lehnenschwenkachse schwenkbar und in mehreren Winkelpositionen verriegelbar ist, sowie mindestens eine Verriegelungsvorrichtung, mittels welcher das Sitzteil mit einer Fahrzeugstruktur verriegelbar ist, wobei ein Entriegelungshebel vorgesehen ist, welcher eine eingeleitete Bewegung zur Entriegelung an die mindestens eine Verriegelungsvorrichtung überträgt.

Erfindungsgemäß weist der Fahrzeugsitz ein erstes Interlockelement auf, welches bei entriegeltem Lehneneinstellbeschlag eine Bewegung des Entriegelungshebels zur Entriegelung der Verriegelungsvorrichtung verhindert, und welches bei entriegelter Verriegelungsvorrichtung eine Entriegelung des Lehneneinstellbeschlags verhindert, wobei das erste Interlockelement als Blockierhebel ausgebildet ist, welcher drehfest mit einer Übertragungsstange verbunden ist, wobei bei einer Drehung der Übertragungsstange eine Entriegelung des Lehneneinstellbeschlags erfolgt, und wobei der Entriegelungshebel ein Blockierelement aufweist oder mit einem Blockierelement zusammen wirkt, welches bei entriegelter Verriegelungsvorrichtung eine Bewegung des Blockierhebels zur Entriegelung des Lehneneinstellbeschlags verhindert.

Damit ist eine gleichzeitige Entriegelung der Verriegelungsvorrichtungen und der Lehneneinstellbeschläge nicht möglich.

Vorzugsweise sind dabei zwei Lehneneinstellbeschläge vorgesehen, und die Übertragungsstange dient zum gleichzeitigen Entriegeln beider Lehneneinstellbeschläge.

Vorzugsweise verhindert der Blockierhebel bei entriegeltem Lehneneinstellbeschlag eine Bewegung des Blockierelements zur Entriegelung der Verriegelungsvorrichtung.

Vorteilhaft ist ein zweites Interlockelement vorgesehen, welches bei annähernd aufrecht stehender Rückenlehne eine Bewegung des Entriegelungshebels zur Entriegelung der Verriegelungsvorrichtung verhindert.

Dabei gestattet das zweite Interlockelement bei auf dem Sitzteil aufliegender Rückenlehne eine Bewegung des Entriegelungshebels zur Entriegelung der Verriegelungsvorrichtung, und verhindert bei entriegelter Verriegelungsvorrichtung eine Schwenkbewegung der Rückenlehne relativ zu dem Sitzteil.

Das zweite Interlockelement ist vorzugsweise als annähernd zylinderförmig ausgestaltetes Durchführelement ausgebildet und derart an dem Sitzteil befestigt, dass seine Zylinderachse mit der Lehnenschwenkachse fluchtet.

Vorteilhaft weist das Durchführelement zwei Durchführöffnungen zur Durchführung von Bowdenzügen auf. Die Bowdenzüge dienen dabei zur Entriegelung der Verriegelungsvorrichtungen.

Das Durchführelement weist an einer Stirnseite einen diametral verlaufenden Schlitz auf, welcher bei auf dem Sitzteil aufliegender Rückenlehne mit einer an dem Entriegelungshebel angebrachten Blockiernase fluchtet.

Die Blockiernase befindet sich dabei bei entriegelter Verriegelungsvorrichtung innerhalb des Schlitzes.

Vorzugsweise sind mindestens zwei Verriegelungsvorrichtungen vorgesehen.

Besonders vorteilhaft sind genau zwei Verriegelungsvorrichtungen vorgesehen.

Vorteilhaft ist der Entriegelungshebel um eine Betätigungsschwenkachse schwenkbar, welche rechtwinklig zu der Lehnenschwenkachse verläuft. Dadurch ergibt sich ein verhältnismäßig einfacher Aufbau.

Vorzugsweise ist eine Rückholfeder vorgesehen, welche den Entriegelungshebel stets in Richtung auf eine Ruheposition hin beaufschlagt, in welcher sich der Entriegelungshebel bei verriegelter Verriegelungsvorrichtung (90) befindet.

Gemäß einer vorteilhaften Ausgestaltung der Erfindung ist das Blockierelement als Blockierarm ausgestaltet, welcher einteilig mit dem Entriegelungshebel ausgebildet ist.

Gemäß einer weiteren vorteilhaften Ausgestaltung der Erfindung ist das Blockierelement als Blockiersegment ausgestaltet, welches separat von dem Entriegelungshebel ausgebildet ist.

Das Blockiersegment und der Entriegelungshebel sind vorzugsweise um eine gleiche Betätigungsschwenkachse schwenkbar gelagert.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Darstellung eines Fahrzeugsitzes gemäß einem ersten Ausführungsbeispiel in Design-Position,
- Fig. 2:: eine schematische Darstellung des Fahrzeugsitzes nach Fig. 1 in Tisch-Position,
- Fig. 3:: eine schematische Darstellung eines Fahrzeugsitzes nach Fig. 1 in Tumble-Position,
- Fig. 4:: eine perspektivische Darstellung einer Interlockeinheit gemäß dem ersten Ausführungsbeispiel,
- Fig. 5:: eine Seitenansicht der Interlockeinheit nach Fig. 4 in Design-Position,
- Fig. 6:: eine Frontansicht der Interlockeinheit nach Fig. 4 in Design-Position,
- Fig. 7:: eine Seitenansicht der Interlockeinheit nach Fig. 4 in Tisch-Position,
- Fig. 8:: eine Frontansicht der Interlockeinheit nach Fig. 4 in Tisch-Position,
- Fig. 9:: eine Seitenansicht der Interlockeinheit nach Fig. 4 in Tumble-Position,
- Fig. 10:: eine Frontansicht der Interlockeinheit nach Fig. 4 in Tumble-Position,
- Fig. 11:: eine schematische Darstellung eines Fahrzeugsitzes gemäß einem zweiten Ausführungsbeispiel in Design-Position,
- Fig. 12:: eine schematische Darstellung des Fahrzeugsitzes nach Fig. 11 in Tisch-Position,
- Fig. 13:: eine schematische Darstellung eines Fahrzeugsitzes nach Fig. 11 in Dump-Position,
- Fig. 14:: eine perspektivische Darstellung einer Interlockeinheit gemäß dem zweiten Ausführungsbeispiel,
- Fig. 15:: eine Seitenansicht der Interlockeinheit nach Fig. 14 in Design-Position,
- Fig. 16:: eine Frontansicht der Interlockeinheit nach Fig. 14 in Design-Position,
- Fig. 17:: eine Seitenansicht der Interlockeinheit nach Fig. 14 in Tisch-Position,
- Fig. 18:: eine Frontansicht der Interlockeinheit nach Fig. 14 in Tisch-Position,
- Fig. 19:: eine Seitenansicht der Interlockeinheit nach Fig. 14 in Dump-Position und
- Fig. 20:: eine Frontansicht der Interlockeinheit nach Fig. 14 in Dump-Position.

Ein Fahrzeugsitz 1 für ein Kraftfahrzeug weist ein Sitzteil 2 und eine Rückenlehne 3 auf. Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Die Rückenlehne 3 ist um eine in Querrichtung verlaufende Lehnenschwenkachse 6 schwenkbar an dem Sitzteil 2 angebracht und umfasst unter anderem ein Rückenlehnenblech. Mittels zweier Lehneneinstellbeschläge 5, welche vorliegend als Rastbeschläge ausgebildet sind, ist die Rückenlehne 3 in mehreren diskreten Winkelstellungen relativ zu dem Sitzteil 2 einstellbar. Ein derartiger Lehneneinstellbeschlag ist beispielsweise in der DE 10 2004 041 449 B3 offenbart, deren diesbezüglicher Offenbarungsgehalt ausdrücklich einbezogen wird.

An einem dem Sitzteil abgewandten Ende der Rückenlehne 3 ist eine Kopfstütze angebracht, welche vorliegend höheneinstellbar und neigungseinstellbar ausgeführt ist.

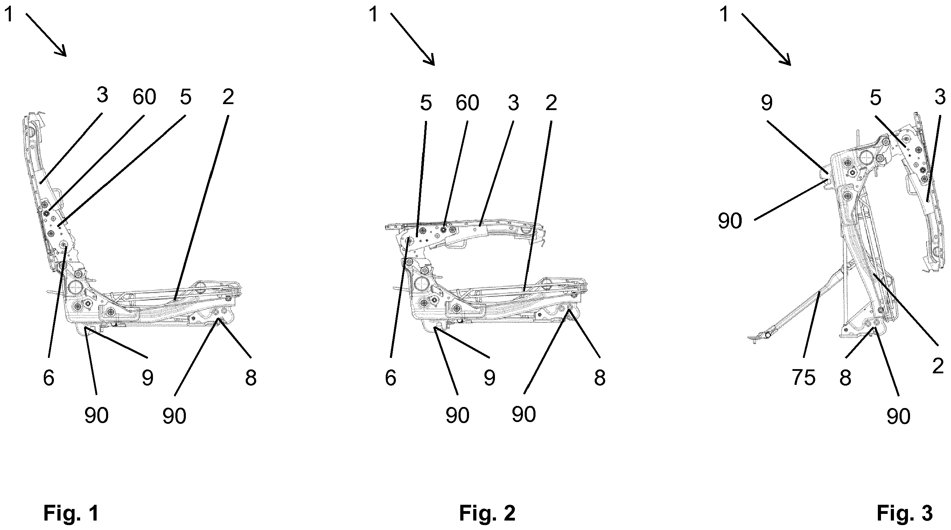

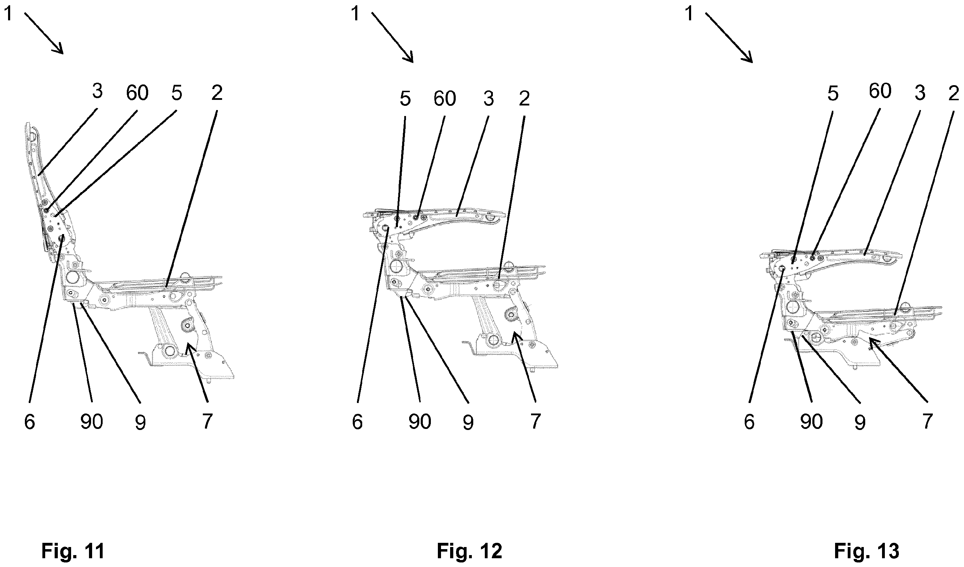

In der Design-Position des Fahrzeugsitzes 1, welche in Fig. 1 und Fig. 11 dargestellt ist, ist die Rückenlehne 3 in einer annähernd senkrechten Position. Durch Entriegeln der Lehneneinstellbeschläge 5 und Schwenken der Rückenlehne 3 in eine waagerechte Position ist der Fahrzeugsitz 1 in eine Tisch-Position überführbar. In der Tisch-Position, welche in Fig. 2 und Fig. 12 dargestellt ist, liegt die Rückenlehne 3 auf dem Sitzteil 2 auf und verläuft annähernd parallel zu diesem und parallel zu dem Fahrzeugboden.

Gemäß einem ersten Ausführungsbeispiel, welches in Fig. 1 bis Fig. 10 dargestellt ist, ist das Sitzteil 2 mit Fahrzeugstruktur lösbar verbunden. Dazu weist das Sitzteil 2 im in Fahrtrichtung vorderen Bereich beidseitig je einen vorderen Fuß 8 auf, welcher eine Verriegelungsvorrichtung 90 umfasst. Ferner weist das Sitzteil 2 im in Fahrtrichtung hinteren Bereich beidseitig je einen hinteren Fuß 9 auf, welcher eine Verriegelungsvorrichtung 90 umfasst. Eine derartige Verriegelungsvorrichtung ist beispielsweise in der WO 2004 069 585 A1 offenbart, deren diesbezüglicher Offenbarungsgehalt ausdrücklich einbezogen wird.

In der Design-Position und in der Tisch-Position des Fahrzeugsitzes 1 sind die Verriegelungsvorrichtungen 90 mit an der Fahrzeugstruktur angebrachten Bolzen verriegelt. Zum Überführen des Fahrzeugsitzes 1 aus der Tisch-Position in eine Tumble-Position werden die beiden Verriegelungsvorrichtungen 90 der hinteren Füße 9 gleichzeitig entriegelt, wodurch die hinteren Füße 9 sich von der Fahrzeugstruktur lösen.

In der Tumble-Position, welche in Fig. 3 dargestellt ist, liegt die Rückenlehne 3 auf dem Sitzteil 2 auf und verläuft annähernd parallel zu diesem. Der Fahrzeugsitz 1 ist nach vorne geklappt und die Rückenlehne 3 und das Sitzteil 2 sind relativ zu dem Fahrzeugboden geneigt. Dabei wird der Fahrzeugsitz 1 mittels einer Strebe 75 in der Tumble-Position gehalten.

Aus Sicherheitsgründen dürfen in der Design-Position die beiden Verriegelungsvorrichtungen 90 der hinteren Füße 9 nicht entriegelt werden, sondern lediglich in der Tisch-Position. In der Tumble-Position sind die Verriegelungsvorrichtungen 90 entriegelt. Die Verriegelungsvorrichtungen 90 dürfen also nur entriegelt werden, wenn die Rückenlehne 3 auf dem Sitzteil 2 aufliegt.

Ebenso dürfen aus Sicherheitsgründen in der Tumble-Position die beiden Lehneneinstellbeschläge 5 nicht entriegelt werden, sondern lediglich in der Tisch-Position sowie in der Design-Position. Die Lehneneinstellbeschläge 5 dürfen also nur entriegelt werden, wenn beide Verriegelungsvorrichtungen 90 verriegelt sind.

Der Fahrzeugsitz 1 umfasst eine Interlockeinheit 50, welche im Folgenden näher beschrieben wird, und welche sicher stellt, dass die oben beschriebenen Entriegelungsvorgänge nur in den entsprechend definierten Positionen des Fahrzeugsitzes 1 durchführbar sind.

Eine Übertragungsstange 60, welche kinematisch der Rückenlehne 3 zugeordnet ist, verläuft parallel zu der Lehnenschwenkachse 6. Die Übertragungsstange 60 ist mit beiden seitlich am Fahrzeugsitz 1 angebrachten Lehneneinstellbeschlägen 5 verbunden und dient zum gleichzeitigen Entriegeln beider Lehneneinstellbeschläge 5. Die Übertragungsstange 60 ist auf der in Fahrtrichtung vorderen Seite des Rückenlehnenblechs angeordnet.

Durch eine Drehung der Übertragungsstange 60 um einen vorgegebenen Winkel um ihre in Querrichtung verlaufende Mittelachse erfolgt eine Entriegelung der Lehneneinstellbeschläge 5. Sind die Lehneneinstellbeschläge 5 entriegelt, so kann die Rückenlehne 3 relativ zu dem Sitzteil 2 um die Lehnenschwenkachse 6 geschwenkt werden.

In der Design-Position, in der Tisch-Position und in der Tumble-Position sind die Lehneneinstellbeschläge 5 jeweils verriegelt. Lediglich während einer Schwenkbewegung der Rückenlehne 3 sind die Lehneneinstellbeschläge 5 entriegelt.

Zum gleichzeitigen Entriegeln beider Verriegelungsvorrichtungen 90 der hinteren Füße 9 ist eine Entriegelungseinheit vorgesehen, welche an dem Rückenlehnenblech befestigt und damit kinematisch ebenfalls der Rückenlehne 3 zugeordnet ist. Die Entriegelungseinheit ist dabei auf der in Fahrtrichtung vorderen Seite des Rückenlehnenblechs angeordnet.

Die Entriegelungseinheit 10 umfasst eine Grundplatte 70, welche weitgehend parallel zu dem Rückenlehnenblech angeordnet ist.

Ein Entriegelungshebel 30 ist um eine Betätigungsschwenkachse 44 schwenkbar gelagert. Die Orientierung der Betätigungsschwenkachse 44 ändert sich je nach der Stellung der Rückenlehne 3 relativ zu dem Sitzteil 2. Die Betätigungsschwenkachse 44 verläuft aber stets annähernd rechtwinklig zu der Lehnenschwenkachse 6. Eine Rückholfeder 61 beaufschlagt den Entriegelungshebel 30 stets in Richtung auf eine Ruheposition hin.

An einem in radialer Richtung abstehenden Arm weist der Entriegelungshebel 30 eine Gurtöse 31 auf, in welche ein als Betätigungselement dienendes Gurtband eingehängt ist. Das Gurtband verläuft von der Gurtöse 31 zunächst in Vertikalrichtung zu einer Umlenkrolle 73. An der Umlenkrolle 73 wird das Gurtband entgegen der Fahrtrichtung umgelenkt und zu einer Gurtöffnung im Rückenlehnenblech geführt. Das Gurtband 62 ist durch die Gurtöffnung hindurch geführt und ragt entgegen der Fahrtrichtung, also nach hinten, aus der Rückenlehne 3 heraus.

Durch Zug an dem aus der Rückenlehne 3 ragenden Ende des Gurtbandes wird der Entriegelungshebel 30 um die Betätigungsschwenkachse 44 in Richtung zu seiner Betätigungsposition hin geschwenkt. Ein nicht dargestelltes Begrenzungselement wirkt als Anschlag und begrenzt die Bewegung des Entriegelungshebels 30 nach Erreichen der Betätigungsposition.

Um eine Steuerschwenkachse 43, welche parallel zu der Betätigungsschwenkachse 44 verläuft, ist ein Steuerzahnrad 20 drehbar gelagert. Das Steuerzahnrad 20 weist etwa entlang seines halben Umfangs eine in den Darstellungen nicht sichtbare Steuerverzahnung auf, welche mit einer Entriegelungsverzahnung 33 des Entriegelungshebels 30 kämmt.

Eine erstes Entriegelungselement 11 ist axial neben dem Steuerzahnrad 20 um die Steuerschwenkachse 43 drehbar gelagert. Das erste Entriegelungselement 11 weist unter anderem einen zylindersegmentartigen Bereich mit einer ersten Mantelfläche 55 auf, in dem eine erste Führungsnut ausgebildet ist. In die erste Führungsnut ist ein nicht dargestellter erster Bowdenzug eingelegt. Der erste Bowdenzug weist an seinem Ende einen ersten Nippel auf, welcher in einer ersten Bowdenzugeinhängung 13 des ersten Entriegelungselements 11 eingehängt ist.

Der erste Bowdenzug verläuft von dem ersten Entriegelungselement 11 zu einem Durchführelement 80, welches an dem Sitzteil 2 befestigt ist. Der erste Bowdenzug verläuft weiter durch eine erste Durchführöffnung 81 des Durchführelements 80 hindurch zu der einen der beiden Verriegelungsvorrichtungen 90 in einem der hinteren Füße 9.

Ein zweites in den Darstellungen nicht sichtbares Entriegelungselement ist ebenfalls axial neben dem Steuerzahnrad 20 um die Steuerschwenkachse 43 drehbar gelagert. Das zweite Entriegelungselement weist unter anderem einen zylindersegmentartigen Bereich mit einer zweiten Mantelfläche auf, in dem eine zweite Führungsnut ausgebildet ist. In die zweite Führungsnut ist ein nicht dargestellter zweiter Bowdenzug eingelegt. Der zweite Bowdenzug weist an seinem Ende einen zweiten Nippel auf, welcher in einer zweiten Bowdenzugeinhängung des zweiten Entriegelungselements eingehängt ist.

Der zweite Bowdenzug verläuft von dem zweiten Entriegelungselement zu dem Durchführelement 80, welches an dem Sitzteil 2 befestigt ist. Der zweite Bowdenzug verläuft weiter durch eine zweite Durchführöffnung 82 des Durchführelements 80 hindurch zu der anderen der beiden Verriegelungsvorrichtungen 90 in einem der hinteren Füße 9.

Wenn die Entriegelungseinheit 10 sich in Ausgangsposition befindet, so befindet sich der Entriegelungshebel 30 in Ruheposition, das Steuerzahnrad 20 befindet sich in Verriegelungsposition, die Entriegelungselemente 11 befinden sich in Verriegelungsstellung, und die beiden Verriegelungsvorrichtungen 90 sind verriegelt. Wenn die Entriegelungseinheit 10 sich in Aktivierungsposition befindet, so befindet sich der Entriegelungshebel 30 in Betätigungsposition, das Steuerzahnrad 20 befindet sich in Entriegelungsposition, die Entriegelungselemente 11 befinden sich in Entriegelungsstellung, und die beiden Verriegelungsvorrichtungen 90 sind entriegelt.

Zwischen dem Steuerzahnrad 20 und dem ersten Entriegelungselement 11 ist eine nicht dargestellte Steuerfeder vorgesehen, welche das erste Entriegelungselement 11 relativ zu dem Steuerzahnrad 20 zur Entriegelungsstellung hin beaufschlagt. Ebenso ist zwischen dem Steuerzahnrad 20 und dem zweiten Entriegelungselement eine Steuerfeder vorgesehen, welche das zweite Entriegelungselement relativ zu dem Steuerzahnrad 20 zur Entriegelungsstellung hin beaufschlagt. Die beiden Steuerfedern sind dabei vorliegend als Drehschenkelfedern ausgebildet und in entsprechende Öffnungen in den Entriegelungselementen 11 und dem Steuerzahnrad 20 eingesteckt. In axialer Richtung bezüglich der Steuerschwenkachse 43 ist das Steuerzahnrad 20 dabei zwischen dem ersten Entriegelungselement 11 und dem zweiten Entriegelungselement angeordnet. Die beiden Steuerfedern befinden sich jeweils zwischen dem Steuerzahnrad 20 und dem zugehörigen Entriegelungselement 11.

In der Ausgangsposition der Entriegelungseinheit 10 ragt ein verhältnismäßig kurzes Ende des Gurtbandes aus der Rückenlehne 3 nach hinten heraus. Dadurch wird einem Benutzer signalisiert, dass beide Verriegelungsvorrichtungen 90 verriegelt sind.

Durch Zug an dem aus der Rückenlehne 3 heraus ragenden Ende des Gurtbandes wird der Entriegelungshebel 30 entgegen der Kraft der Rückholfeder 61 in Richtung auf die Betätigungsposition hin geschwenkt. Dabei wird das Steuerzahnrad 20 in Richtung auf die Entriegelungsposition hin gedreht. Nachdem das Steuerzahnrad 20 einen Leerweg durchlaufen hat schlägt ein an dem Steuerzahnrad 20 angebrachter Mitnehmer 24 an einem ersten Gegenanschlag des ersten Entriegelungselements 11 und an einem zweiten Gegenanschlag des zweiten Entriegelungselements an.

Der Mitnehmer 24 ist vorliegend in einem der Steuerverzahnung diametral gegenüberliegenden Bereich des Steuerzahnrades 20 angebracht und steht in axialer Richtung beidseitig von diesem ab. Die Gegenanschläge der Entriegelungselemente 11 sind im Wesentlichen als in radialer und axialer Richtung verlaufende glatte Flächen ausgebildet.

Durch weiteren Zug an dem Ende des Gurtbandes nimmt das Steuerzahnrad 20 die Entriegelungselemente 11 mit, wodurch diese in Richtung auf die Entriegelungsstellung hin gedreht werden. Dabei erfolgt ein Zug an den Bowdenzügen wodurch die Verriegelungsvorrichtungen 90 entriegelt werden. Diese Bewegung endet, wenn der Entriegelungshebel 30 an dem Begrenzungselement anschlägt und die Entriegelungseinheit sich in Aktivierungsposition befindet. Das Gurtband ragt dann verhältnismäßig weit aus der Rückenlehne 3 heraus. Dadurch wird einem Benutzer signalisiert, dass mindestens eine der beiden Verriegelungsvorrichtungen 90 entriegelt ist.

Lässt der Benutzer nun das Gurtband los, so wird der Entriegelungshebel 30 durch die Kraft der Rückholfeder 61 in Richtung auf die Ruheposition hin geschwenkt. Dadurch wird auch das Steuerzahnrad 20 in Richtung auf die Verriegelungsposition hin gedreht und der Mitnehmer 24 entfernt sich von den Gegenanschlägen der Entriegelungselemente 11. Die Entriegelungselemente 11 verbleiben, aufgrund der Beaufschlagung durch die Steuerfedern in der Entriegelungsstellung.

Die Bewegung des Entriegelungshebels 30 endet, wenn ein Anschlagelement 34 des Entriegelungshebels 30 an die erste Mantelfläche 55 und/oder an die zweite Mantelfläche anschlägt. Das Anschlagelement 34 ist vorliegend an dem Arm des Entriegelungshebels 30 angebracht. Das Anschlagelement 34 ist in radialer Richtung näher an der Betätigungsschwenkachse 44 angeordnet als die Gurtöse 31 und steht in axialer Richtung beidseitig von dem Arm ab.

Der Entriegelungshebel 30 befindet sich nun in Offenhalteposition und die Entriegelungseinheit 10 befindet sich in Anzeigeposition. Das Gurtband ist, im Vergleich zu der Aktivierungsposition, zwar teilweise in die Rückenlehne 3 eingezogen, ragt aber immer noch verhältnismäßig weit aus der Rückenlehne 3 heraus. Dadurch wird einem Benutzer signalisiert, dass mindestens eine der beiden Verriegelungsvorrichtungen 90 entriegelt ist.

Die hinteren Füße 9 des Fahrzeugsitzes 1 können nun von der Fahrzeugstruktur entfernt werden, und der Fahrzeugsitz 1 kann nach vorne in die Tumble-Position geklappt werden.

Beim erneuten Aufsetzen der hinteren Füße 9 auf die Bolzen der Fahrzeugstruktur kann der Fahrzeugsitz 1 verkanten. Dabei verriegelt nur eine der beiden Verriegelungsvorrichtungen 90 mit dem zugeordneten Bolzen in der Fahrzeugstruktur, während die andere der beiden Verriegelungsvorrichtungen 90 nicht oder erst mit zeitlicher Verzögerung mit dem zugeordneten Bolzen in der Fahrzeugstruktur verriegelt.

Beispielsweise ist nach dem Aufsetzen der hinteren Füße auf die Bolzen die mit dem ersten Entriegelungselement 11 verbundene Verriegelungsvorrichtung 90 entriegelt, und die mit dem zweiten Entriegelungselement verbundene Verriegelungsvorrichtung 90 ist verriegelt. Beim Verriegeln zieht die mit dem zweiten Entriegelungselement verbundene Verriegelungsvorrichtung 90 an dem zweiten Bowdenzug, wodurch das zweite Entriegelungselement in die Verriegelungsstellung gedreht wird. Das erste Entriegelungselement 11 verbleibt jedoch in der Entriegelungsstellung.

Das Anschlagelement 34 des Entriegelungshebels 30 verliert dabei den Kontakt zu der zweiten Mantelfläche, liegt jedoch immer noch an der ersten Mantelfläche 55 an. Der Entriegelungshebel 30 verbleibt daher in der Offenhalteposition und das Gurtband ragt immer noch verhältnismäßig weit aus der Rückenlehne 3 heraus. Einem Benutzer wird somit signalisiert, dass mindestens eine der beiden Verriegelungsvorrichtungen 90 entriegelt ist.

Verriegelt nun auch die mit dem ersten Entriegelungselement 11 verbundene Verriegelungsvorrichtung 90, so zieht diese an dem ersten Bowdenzug, wodurch auch das erste Entriegelungselement 11 in die Verriegelungsstellung gedreht wird. Dabei verliert das Anschlagelement 34 des Entriegelungshebels 30 auch den Kontakt zu der ersten Mantelfläche 55 und der Entriegelungshebel 30 wird durch die Kraft der Rückholfeder in die Ruheposition zurück gedreht. Dabei wird auch das Steuerzahnrad 20 in die Verriegelungsposition zurück gedreht.

Die Entriegelungseinheit befindet sich somit wieder in der Ausgangsposition. Das Gurtband wird von dem Entriegelungshebel 30 dabei so weit in die Rückenlehne 3 hinein gezogen, dass nur noch ein verhältnismäßig kurzes Ende des Gurtbandes außen sichtbar ist. Dadurch wird einem Benutzer signalisiert, dass beide Verriegelungsvorrichtungen 90 verriegelt sind.

Auf der Übertragungsstange 60 ist, nahe der Entriegelungseinheit, ein Blockierhebel 54 angebracht und drehfest mit dieser verbunden. Bei einer Entriegelung der Lehneneinstellbeschläge 5 schwenkt der Blockierhebel 54 entsprechend mit. Der Entriegelungshebel 30 weist einen Blockierarm 36 auf, welcher mit dem Blockierhebel 54 zusammenwirkt.

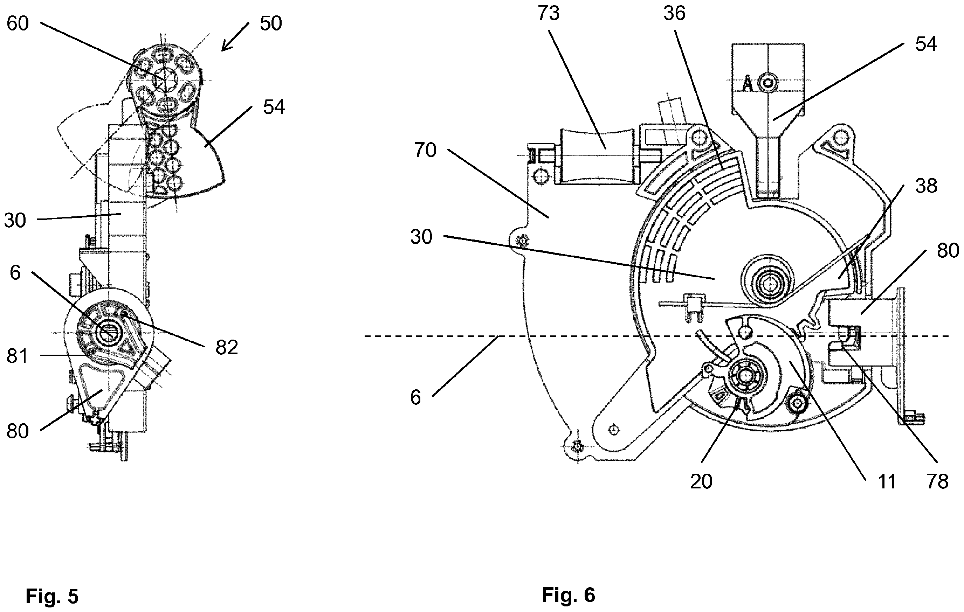

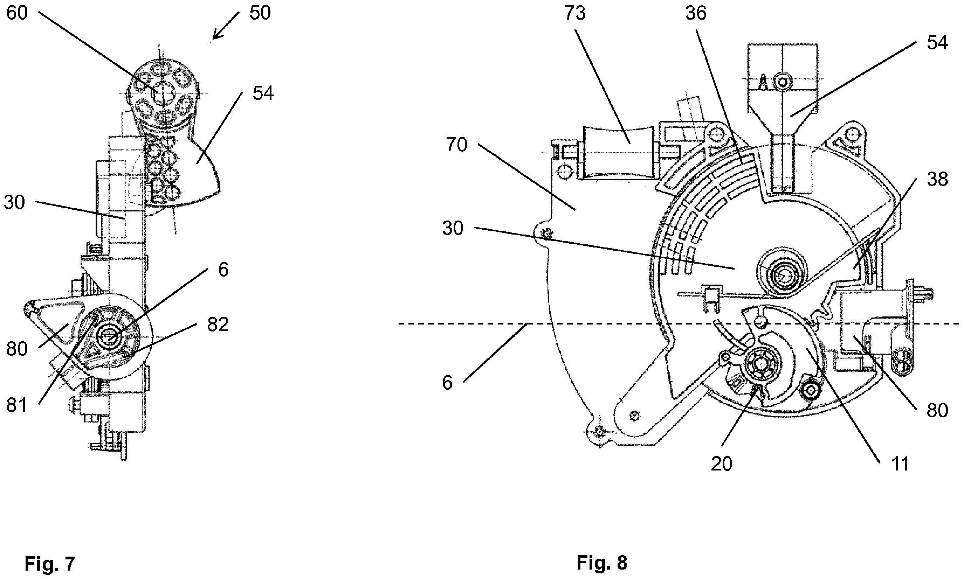

In der Design-Position, welche in Fig. 5 und Fig. 6 dargestellt ist, sowie in der Tisch-Position, welche in Fig. 7 und Fig. 8 dargestellt ist, befindet sich der Entriegelungshebel 30 jeweils in Ruheposition, wobei der Blockierarm 36 sich seitlich neben dem Blockierhebel 54 befindet. Beim Entriegeln der Lehneneinstellbeschläge 5 schwenkt der Blockierhebel 54 seitlich an dem Blockierarm 36 vorbei. Ein Entriegeln der Lehneneinstellbeschläge 5 ist somit in der Design-Position und in der Tisch-Position des Fahrzeugsitzes 1 möglich. Ebenso schwenkt der Blockierarm 36 beim Entriegeln der Verriegelungsvorrichtungen 90 an dem Blockierhebel 54 vorbei. Ein Entriegeln der Verriegelungsvorrichtungen 90 ist somit in der Tisch-Position des Fahrzeugsitzes 1 möglich. Ein Entriegeln der Verriegelungsvorrichtungen 90 in der Design-Position des Fahrzeugsitzes 1 ist jedoch, wie unten noch gezeigt wird, nicht möglich.

Bei der Darstellung nach Fig. 5 ist der Blockierhebel 54 auch im zur Entriegelung der Lehneneinstellbeschläge 5 geschwenkten Zustand mit strichpunktierten Umrissen zusätzlich dargestellt.

Während des Entriegelns der Lehneneinstellbeschläge 5, also so lange die Lehneneinstellbeschläge 5 entriegelt sind, befindet sich der Blockierhebel 54 vor dem Blockierarm 36. Beim Versuch, die Verriegelungsvorrichtungen 90 zu entriegeln schlägt der Blockierarm 36 des Entriegelungshebels 30 an den Blockierhebel 54 an. Ein Entriegeln der Verriegelungsvorrichtungen 90 bei entriegelten Lehneneinstellbeschlägen 5 ist somit nicht möglich.

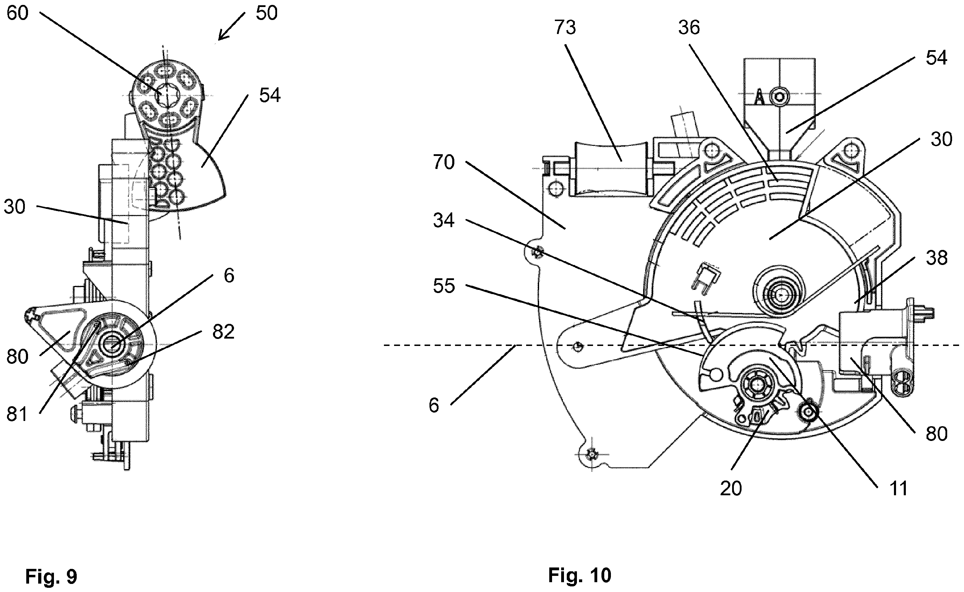

In der Tumble-Position, welche in Fig. 9 und Fig. 10 dargestellt ist, befindet sich der Entriegelungshebel 30 in Offenhalteposition. Dabei befindet sich der Blockierarm 36 unmittelbar vor dem Blockierhebel 54. Beim Versuch, die Lehneneinstellbeschläge 5 zu entriegeln schlägt der Blockierhebel 54 an den Blockierarm 36 an. Ein Entriegeln der Lehneneinstellbeschläge 5 ist somit in der Tumble-Position des Fahrzeugsitzes 1 nicht möglich.

Das an dem Sitzteil 2 befestigte Durchführelement 80 ist annähernd zylinderförmig ausgestaltet, wobei seine Zylinderachse mit der Lehnenschwenkachse 6 fluchtet. Das Durchführelement 80 ist somit kinematisch dem Sitzteil 2 zugeordnet. Bei einer Schwenkung der Rückenlehne 3 von der Design-Position in die Tisch-Position dreht sich das Durchführelement 80 somit relativ zu der Entriegelungseinheit.

Das Durchführelement 80 weist an einer Stirnseite, welche in Querrichtung zum Inneren des Fahrzeugsitzes 1 weist, also der Entriegelungseinheit zugewandt ist, einen diametral verlaufenden Schlitz 78 auf. Das Durchführelement 80 ist derart angeordnet, dass der Schlitz 78 bei in der Tisch-Position befindlichem Fahrzeugsitz 1 mit einer an dem Entriegelungshebel 30 angebrachte Blockiernase 38 fluchtet.

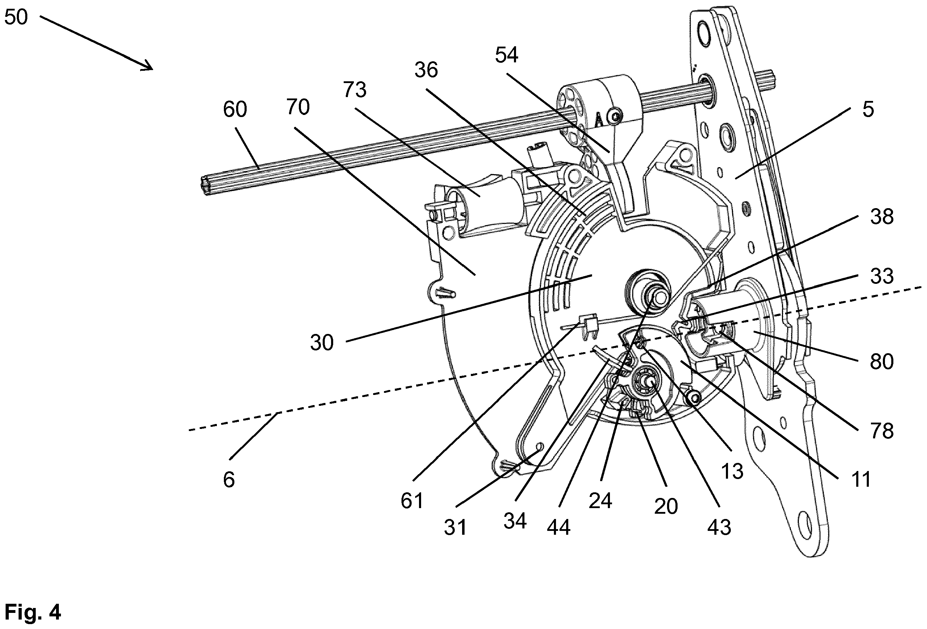

Bei in Design-Position befindlichem Fahrzeugsitz 1 verläuft der Schlitz 78 schräg zu der Bewegungsrichtung der Blockiernase 38, wie in Fig. 4 und Fig. 6 dargestellt. Beim Versuch, die Verriegelungsvorrichtungen 90 zu entriegeln schlägt die Blockiernase 38 des Entriegelungshebels 30 an dem Zylindermantel des Durchführelements 80 an. Ein Entriegeln der Verriegelungsvorrichtungen 90 bei in Design-Position befindlichem Fahrzeugsitz 1 ist somit nicht möglich.

Bei in Tisch-Position befindlichem Fahrzeugsitz 1 verläuft der Schlitz 78 in die gleiche Richtung wie die Bewegungsrichtung der Blockiernase 38, wie in Fig. 8 dargestellt. Der Schlitz 78 ist in dieser Darstellung nicht sichtbar. Die Blockiernase 38 schwenkt beim Entriegeln der Verriegelungsvorrichtungen 90 in den Schlitz 78 ein. Ein Entriegeln der Verriegelungsvorrichtungen 90 ist somit in der Tisch-Position des Fahrzeugsitzes 1 möglich.

In der Tumble-Position, welche in Fig. 10 dargestellt ist, befindet sich der Entriegelungshebel 30 in Offenhalteposition. Dabei befindet sich die Blockiernase 38 des Entriegelungshebels 30 innerhalb des Schlitzes 78 des Durchführelements 80. In der Tumble-Position ist, wie oben beschrieben, ein Entriegeln der Lehneneinstellbeschläge 5 nicht möglich. Selbst wenn die Lehneneinstellbeschläge 5 in der Tumble-Position entriegelt wären, wäre eine Schwenkbewegung der Rückenlehne 3 relativ zu dem Sitzteil 2 nicht möglich. Die Randbereiche des Schlitzes 78 würden in diesem Fall an der Blockiernase 38 anschlagen und eine Schwenkbewegung der Rückenlehne 3 relativ zu dem Sitzteil 2 verhindern.

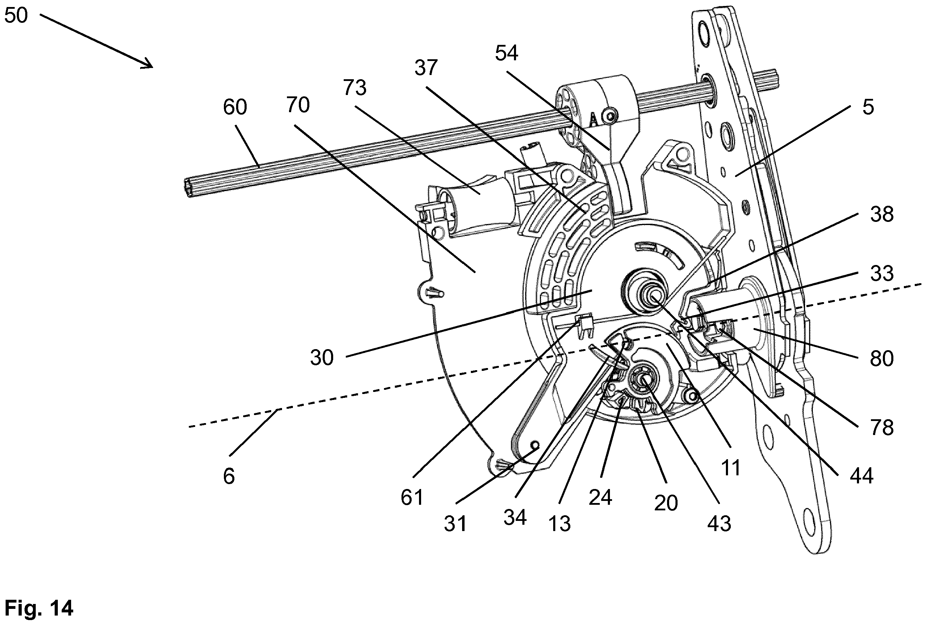

Gemäß einem zweiten Ausführungsbeispiel, welches in Fig. 11 bis Fig. 20 dargestellt ist, ist das Sitzteil 2 fest mit Fahrzeugstruktur verbunden. Der Fahrzeugsitz 1 gemäß dem zweiten Ausführungsbeispiel ist weitgehend gleich dem Fahrzeugsitz 1 des ersten Ausführungsbeispiel ausgestaltet. Im Folgenden wird annähernd nur auf Unterschiede zwischen dem ersten und dem zweiten Ausführungsbeispiel eingegangen.

Das Sitzteil 2 ist im in Fahrtrichtung vorderen Bereich beidseitig mit je einen Viergelenk 7 an die Fahrzeugstruktur angelenkt. Ferner weist das Sitzteil 2, wie auch im ersten Ausführungsbeispiel, im in Fahrtrichtung hinteren Bereich beidseitig je einen hinteren Fuß 9 auf, welcher eine Verriegelungsvorrichtung 90 umfasst.

Der Fahrzeugsitz 1 ist durch Schwenken der Rückenlehne 3 in eine waagerechte Position ebenfalls von einer in Fig. 11 dargestellten Design-Position in eine in Fig. 12 dargestellte Tisch-Position überführbar. Aus der beschriebenen Tisch-Position ist der Fahrzeugsitz 1 in eine Dump-Position überführbar, welche in Fig. 13 dargestellt ist. In der Dump-Position des Fahrzeugsitzes 1 liegt die Rückenlehne 3 auf dem Sitzteil 2 auf und das Sitzteil 2 ist mittels des Viergelenks 7 in Fahrtrichtung nach vorne sowie in Vertikalrichtung nach unten geschwenkt. Die Verriegelungsvorrichtungen 90 sind dabei mit zwei anderen, in Fahrtrichtung weiter vorn angeordneten Bolzen an der Fahrzeugstruktur verriegelt.

Auch bei in Dump-Position befindlichem Fahrzeugsitz 1, also bei verriegelten Verriegelungsvorrichtungen 90, dürfen aus Sicherheitsgründen die beiden Lehneneinstellbeschläge 5 nicht entriegelt werden.

Der in Dump-Position überführbare Fahrzeugsitz 1 gemäß dem zweiten Ausführungsbeispiel weist daher zusätzlich eine nicht dargestellte Übertragungseinheit auf, welche bei in Dump-Position befindlichem Fahrzeugsitz 1 ein entsprechendes Signal an die Interlockeinheit 50 liefert. Die Übertragungseinheit umfasst im Wesentlichen einen Übertragungsbowdenzug, welcher bei in Dump-Position befindlichem Fahrzeugsitz 1 einen um die Betätigungsschwenkachse 44 schwenkbaren Übertragungshebel schwenkt. Der Übertragungshebel wirkt dabei mit einem zusätzlichen Blockiersegment 37 zusammen, welches ebenfalls um die Betätigungsschwenkachse 44 schwenkbar gelagert ist. Das Blockiersegment 37 ist dabei weitgehend koaxial zu dem Entriegelungshebel 30 angeordnet.

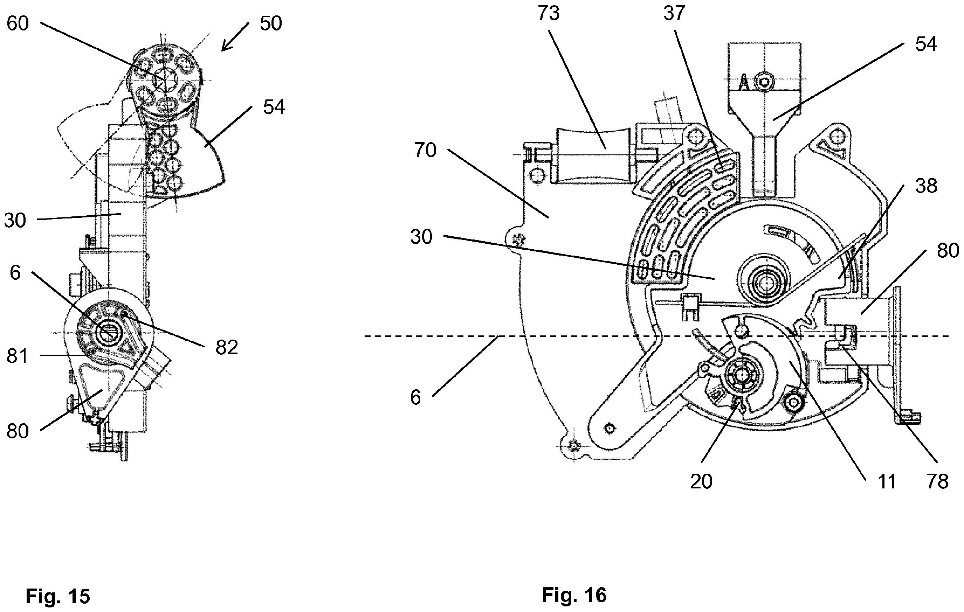

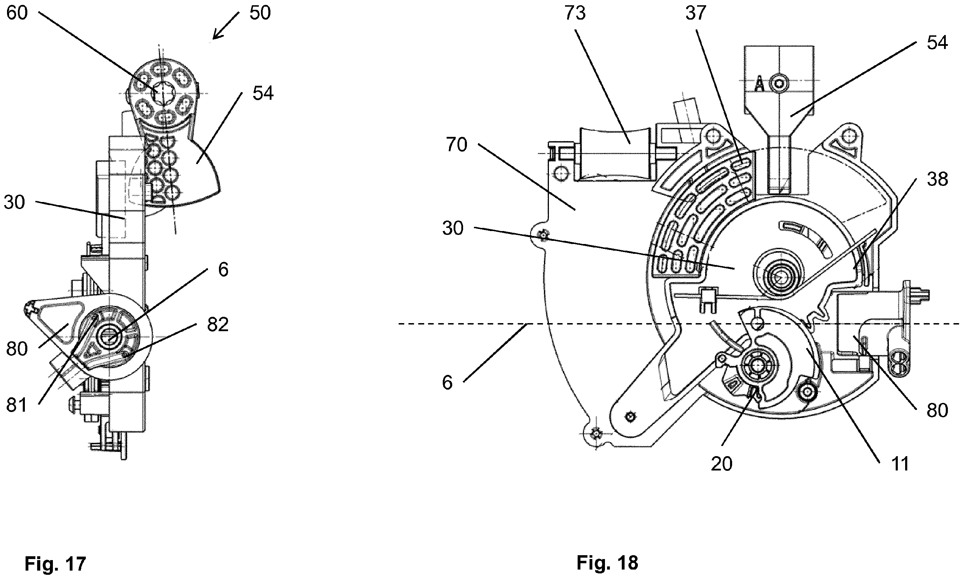

Bei einem Übergang von der in Fig. 15 und Fig. 16 dargestellten Design-Position in die in Fig. 17 und Fig. 18 dargestellte Tisch-Position erfährt das Durchführelement 80, wie bei dem ersten Ausführungsbeispiel, eine Drehung relativ zu der Rückenlehne 3, wodurch der Schlitz 78 mit der an dem Entriegelungshebel 30 angebrachten Blockiernase 38 fluchtet.

Bei der Darstellung nach Fig. 15 ist der Blockierhebel 54 auch im zur Entriegelung der Lehneneinstellbeschläge 5 geschwenkten Zustand mit strichpunktierten Umrissen zusätzlich dargestellt.

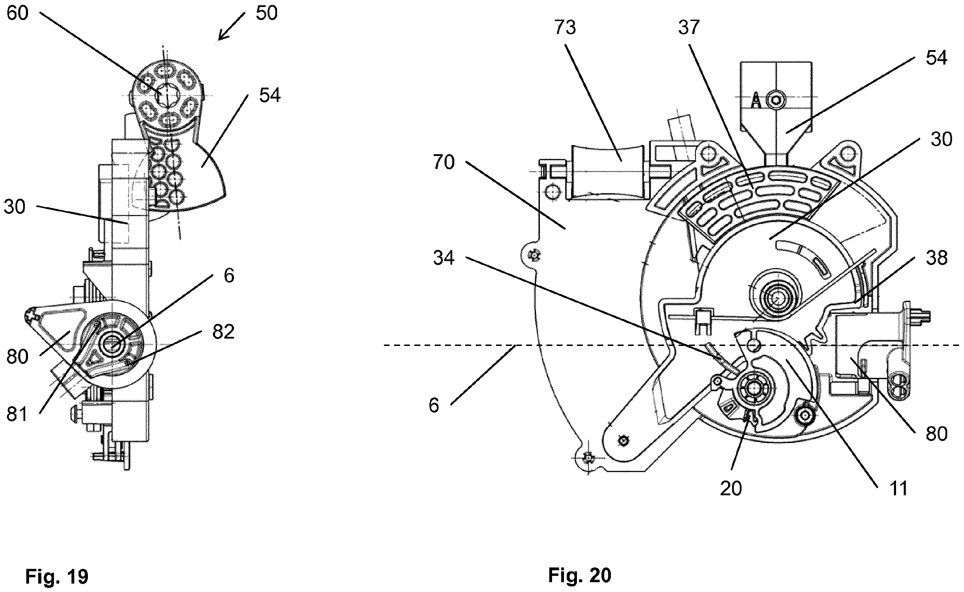

Bei einem Übergang von der in Fig. 17 und Fig. 18 dargestellten Tisch-Position in die in Fig. 19 und Fig. 20 dargestellte Dump-Position werden zunächst die Verriegelungsvorrichtungen 90 durch Schwenken des Entriegelungshebels 30 geöffnet. Der Entriegelungshebel 30 nimmt dabei das Blockiersegment 37 mit und schwenkt dieses vor den Blockierhebel 54. Das Blockiersegment 37 verhindert somit eine Bewegung des Blockierhebels 54 und damit eine Entriegelung der Lehneneinstellbeschläge 5 während eine der Verriegelungsvorrichtungen 90 offen ist. Solange eine der Verriegelungsvorrichtungen 90 offen ist verbleibt der Entriegelungshebel 30 in der Offenhalteposition und hält damit auch das Blockiersegment 37 vor dem Blockierhebel 54.

Nach Erreichen der Dump-Position verriegeln die Verriegelungsvorrichtungen 90 mit den vorderen Bolzen an der Fahrzeugstruktur und der Entriegelungshebel 30 schwenkt in seine Ruheposition zurück.

Das Blockiersegment 37 wird jedoch in der Dump-Position von dem Übertragungshebel, welcher von dem Übertragungsbowdenzug geschwenkt wird, in seiner Stellung vor dem Blockierhebel 54 gehalten und verbleibt dort. Das Blockiersegment 37 verhindert somit eine Bewegung des Blockierhebels 54 und damit eine Entriegelung der Lehneneinstellbeschläge 5 während der Fahrzeugsitz 1 sich in der Dump-Position befindet.

Bei der Rückkehr von der in Fig. 19 und Fig. 20 dargestellten Dump-Position in die in Fig. 17 und Fig. 18 dargestellte Tisch-Position werden zunächst die Verriegelungsvorrichtungen 90 durch Schwenken des Entriegelungshebels 30 geöffnet. Der Entriegelungshebel 30 verbleibt dabei in Offenhalteposition solang eine der Verriegelungsvorrichtungen 90 geöffnet ist.

Während der Bewegung des Sitzteils 2 nach hinten gibt der Übertragungsbowdenzug den Übertragungshebel frei, welcher daraufhin federbelastet zurück schwenkt. Dadurch gibt der Übertragungshebel auch das Blockiersegment 37 frei, welches aber noch durch den Entriegelungshebel 30 in der Stellung vor dem Blockierhebel 54 gehalten wird.

Nach Erreichen der Tisch-Position schwenkt der Entriegelungshebel 30 in seine Offenhalteposition zurück und gibt damit das Blockiersegment 37 auch frei. Daraufhin schwenkt das das Blockiersegment 37 federbelastet zurück und gibt den Blockierhebel 54 frei.

### Bezugszeichenliste

- 1: Fahrzeugsitz
- 2: Sitzteil
- 3: Rückenlehne
- 5: Lehneneinstellbeschlag
- 6: Lehnenschwenkachse
- 7: Viergelenk
- 8: Vorderer Fuß
- 9: Hinterer Fuß
- 11: Erstes Entriegelungselement
- 13: Erste Bowdenzugeinhängung
- 20: Steuerzahnrad
- 24: Mitnehmer
- 30: Entriegelungshebel
- 31: Gurtöse
- 33: Entriegelungsverzahnung
- 34: Anschlagelement
- 36: Blockierarm
- 37: Blockiersegment
- 38: Blockiernase
- 43: Steuerschwenkachse
- 44: Betätigungsschwenkachse
- 50: Interlockeinheit
- 54: Blockierhebel
- 55: Erste Mantelfläche
- 60: Übertragungsstange
- 61: Rückholfeder
- 70: Grundplatte
- 73: Umlenkrolle
- 75: Strebe
- 78: Schlitz
- 80: Durchführelement
- 81: Erste Durchführöffnung
- 82: Zweite Durchführöffnung
- 90: Verriegelungsvorrichtung

## Patentansprüche

1. Verstellbarer Fahrzeugsitz (1), umfassend
ein Sitzteil (2) und eine Rückenlehne (3),
welche mittels mindestens eines Lehneneinstellbeschlags (5) relativ zu dem Sitzteil (2) um eine Lehnenschwenkachse (6) schwenkbar und in mehreren Winkelpositionen verriegelbar ist, sowie
mindestens eine Verriegelungsvorrichtung (90),
mittels welcher das Sitzteil (2) mit einer Fahrzeugstruktur verriegelbar ist, wobei
ein Entriegelungshebel (30) vorgesehen ist, welcher eine eingeleitete Bewegung zur Entriegelung an die mindestens eine Verriegelungsvorrichtung (90) überträgt,
**dadurch gekennzeichnet, dass**
der Fahrzeugsitz (1) ein erstes Interlockelement aufweist, welches bei entriegeltem Lehneneinstellbeschlag (5) eine Bewegung des Entriegelungshebels (30) zur Entriegelung der Verriegelungsvorrichtung (90) verhindert, und welches
bei entriegelter Verriegelungsvorrichtung (90) eine Entriegelung des Lehneneinstellbeschlags (5) verhindert, wobei
das erste Interlockelement als Blockierhebel (54) ausgebildet ist, welcher drehfest mit einer Übertragungsstange (60) verbunden ist, wobei bei einer Drehung der Übertragungsstange (60) eine Entriegelung des Lehneneinstellbeschlags (5) erfolgt, und wobei
der Entriegelungshebel (30) ein Blockierelement (36, 37) aufweist oder mit einem Blockierelement (36, 37) zusammen wirkt, welches bei entriegelter Verriegelungsvorrichtung (90) eine Bewegung des Blockierhebels (54) zur Entriegelung des Lehneneinstellbeschlags (5) verhindert.

2. Verstellbarer Fahrzeugsitz (1) nach Anspruch 1, **dadurch gekennzeichnet, dass** zwei Lehneneinstellbeschläge (5) vorgesehen sind, und dass die Übertragungsstange (60) zum gleichzeitigen Entriegeln beider Lehneneinstellbeschläge (5) dient.

3. Verstellbarer Fahrzeugsitz (1) nach einem der vorstehenden Ansprüche, **dadurch gekennzeichnet, dass** der Blockierhebel (54) bei entriegeltem Lehneneinstellbeschlag (5) eine Bewegung des Blockierelements (36, 37) zur Entriegelung der Verriegelungsvorrichtung (90) verhindert.

4. Verstellbarer Fahrzeugsitz (1) nach einem der vorstehenden Ansprüche, **dadurch gekennzeichnet, dass** der Fahrzeugsitz (1) ein zweites Interlockelement (80) aufweist, welches bei annähernd aufrecht stehender Rückenlehne (3) eine Bewegung des Entriegelungshebels (30) zur Entriegelung der Verriegelungsvorrichtung (90) verhindert.

5. Verstellbarer Fahrzeugsitz (1) nach Anspruch 4, **dadurch gekennzeichnet, dass** das zweite Interlockelement (80) bei auf dem Sitzteil (2) aufliegender Rückenlehne (3) eine Bewegung des Entriegelungshebels (30) zur Entriegelung der Verriegelungsvorrichtung (90) gestattet, und welches bei entriegelter Verriegelungsvorrichtung (90) eine Schwenkbewegung der Rückenlehne (3) relativ zu dem Sitzteil (2) verhindert.

6. Verstellbarer Fahrzeugsitz (1) nach einem der Ansprüche 4 oder 5, **dadurch gekennzeichnet, dass** das zweite Interlockelement (80) als annähernd zylinderförmig ausgestaltetes Durchführelement (80) ausgebildet ist, welches derart an dem Sitzteil (2) befestigt ist, dass seine Zylinderachse mit der Lehnenschwenkachse (6) fluchtet.

7. Verstellbarer Fahrzeugsitz (1) nach Anspruch 6, **dadurch gekennzeichnet, dass** das Durchführelement (80) zwei Durchführöffnungen (81, 82) zur Durchführung von Bowdenzügen (83, 84) aufweist.

8. Verstellbarer Fahrzeugsitz (1) nach einem der Ansprüche 6 oder 7, **dadurch gekennzeichnet, dass** das Durchführelement (80) an einer Stirnseite einen diametral verlaufenden Schlitz (78) aufweist, welcher bei auf dem Sitzteil (2) aufliegender Rückenlehne (3) mit einer an dem Entriegelungshebel (30) angebrachten Blockiernase (38) fluchtet.

9. Verstellbarer Fahrzeugsitz (1) nach Anspruch 8, **dadurch gekennzeichnet, dass** die Blockiernase (38) sich bei entriegelter Verriegelungsvorrichtung (90) innerhalb des Schlitzes (78) befindet.

10. Verstellbarer Fahrzeugsitz (1) nach einem der vorstehenden Ansprüche, **dadurch gekennzeichnet, dass** mindestens zwei, vorzugsweise genau zwei Verriegelungsvorrichtungen (90) vorgesehen sind.

11. Verstellbarer Fahrzeugsitz (1) nach einem der vorstehenden Ansprüche, **dadurch gekennzeichnet, dass** der Entriegelungshebel (30) um eine Betätigungsschwenkachse (44) schwenkbar ist, welche rechtwinklig zu der Lehnenschwenkachse (6) verläuft.

12. Verstellbarer Fahrzeugsitz (1) nach Anspruch 8, **dadurch gekennzeichnet, dass** eine Rückholfeder (61) den Entriegelungshebel (30) stets in Richtung auf eine Ruheposition hin beaufschlagt, in welcher sich der Entriegelungshebel (30) bei verriegelter Verriegelungsvorrichtung (90) befindet.

13. Verstellbarer Fahrzeugsitz (1) nach einem der vorstehenden Ansprüche, **dadurch gekennzeichnet, dass** das Blockierelement (36) als Blockierarm (36) ausgestaltet ist, welcher einteilig mit dem Entriegelungshebel (30) ausgebildet ist.

14. Verstellbarer Fahrzeugsitz (1) nach einem der Ansprüche 1 bis 12, **dadurch gekennzeichnet, dass** das Blockierelement (37) als Blockiersegment (37) ausgestaltet ist, welches separat von dem Entriegelungshebel (30) ausgebildet ist.

15. Verstellbarer Fahrzeugsitz (1) nach Anspruch 14, **dadurch gekennzeichnet, dass** das Blockiersegment (37) und der Entriegelungshebel (30) um eine gleiche Betätigungsschwenkachse (44) schwenkbar gelagert sind.

## Claims

1. Adjustable vehicle seat (1), comprising a seat part (2) and a backrest (3) which can be pivoted relative to the seat part (2) about a backrest pivot axis (6) by means of at least one backrest setting fitting (5) and can be locked in a plurality of angular positions, and at least one locking apparatus (90), by means of which the seat part (2) can be locked to a vehicle structure, an unlocking lever (30) being provided which transmits an introduced movement for unlocking to the at least one locking apparatus (90), **characterized in that** the vehicle seat (1) has a first interlocking element which, when the backrest setting fitting (5) is unlocked, prevents a movement of the unlocking lever (30) for unlocking the locking apparatus (90), and which, when the locking apparatus (90) is unlocked, prevents unlocking of the backrest setting fitting (5), the first interlocking element being configured as a blocking lever (54) which is connected fixedly to a transmission rod (60) so as to rotate with it, unlocking of the backrest setting fitting (5) taking place during a rotation of the transmission rod (60), and the unlocking lever (30) having a blocking element (36, 37) or interacting with a blocking element (36, 37) which, when the locking apparatus (90) is unlocked, prevents a movement of the blocking lever (54) for unlocking the backrest setting fitting (5).

2. Adjustable vehicle seat (1) according to Claim 1, **characterized in that** two backrest setting fittings (5) are provided, and **in that** the transmission rod (60) serves for simultaneous unlocking of both backrest setting fittings (5).

3. Adjustable vehicle seat (1) according to either of the preceding claims, **characterized in that**, when the backrest setting fitting (5) is unlocked, the blocking lever (54) prevents a movement of the blocking element (36, 37) for unlocking the locking apparatus (90).

4. Adjustable vehicle seat (1) according to one of the preceding claims, **characterized in that** the vehicle seat (1) has a second interlocking element (80) which, when the backrest (3) is approximately upright, prevents a movement of the unlocking lever (30) for unlocking the locking apparatus (90).

5. Adjustable vehicle seat (1) according to Claim 4, **characterized in that**, when the backrest (3) rests on the seat part (2), the second interlocking element (80) permits a movement of the unlocking lever (30) for unlocking the locking apparatus (90), and which second interlocking element (80), when the locking apparatus (90) is unlocked, prevents a pivoting movement of the backrest (3) relative to the seat part (2).

6. Adjustable vehicle seat (1) according to either of Claims 4 and 5, **characterized in that** the second interlocking element (80) is configured as a leadthrough element (80) of approximately cylindrical design which is fastened to the seat part (2) in such a way that its cylinder axis is aligned with the backrest pivot axis (6) .

7. Adjustable vehicle seat (1) according to Claim 6, **characterized in that** the leadthrough element (80) has two leadthrough openings (81, 82) for leading through Bowden cables (83, 84).

8. Adjustable vehicle seat (1) according to either of Claims 6 and 7, **characterized in that**, on one end side, the leadthrough element (80) has a diametrically running slot (78) which, when the backrest (3) rests on the seat part (2), is aligned with a blocking lug (38) which is attached to the unlocking lever (30).

9. Adjustable vehicle seat (1) according to Claim 8, **characterized in that**, when the locking apparatus (90) is unlocked, the blocking lug (38) is situated within the slot (78).

10. Adjustable vehicle seat (1) according to one of the preceding claims, **characterized in that** at least two, preferably precisely two locking apparatuses (90) are provided.

11. Adjustable vehicle seat (1) according to one of the preceding claims, **characterized in that** the unlocking lever (30) can be pivoted about an actuating pivot axis (44) which runs at right angles with respect to the backrest pivot axis (6).

12. Adjustable vehicle seat (1) according to Claim 8, **characterized in that** a return spring (61) loads the unlocking lever (30) constantly in the direction of a rest position, in which the unlocking lever (30) is situated when the locking apparatus (90) is locked.

13. Adjustable vehicle seat (1) according to one of the preceding claims, **characterized in that** the blocking element (36) is designed as a blocking arm (36) which is configured in one piece with the unlocking lever (30).

14. Adjustable vehicle seat (1) according to one of Claims 1 to 12, **characterized in that** the blocking element (37) is designed as a blocking segment (37) which is configured separately from the unlocking lever (30).

15. Adjustable vehicle seat (1) according to Claim 14, **characterized in that** the blocking segment (37) and the unlocking lever (30) are mounted such that they can be pivoted about an identical actuating pivot axis (44).

## Revendications

1. Siège de véhicule réglable (1), comprenant une partie assise (2) et un dossier (3) que l'on peut faire pivoter par rapport à la partie assise (2) autour d'un axe de pivotement de dossier (6) au moyen d'au moins un accessoire de positionnement de dossier (5) et qui peut être verrouillé dans une pluralité de positions angulaires, et au moins un appareil de verrouillage (90), au moyen duquel la partie assise (2) peut être verrouillée sur une structure de véhicule, un levier de déverrouillage (30) étant prévu lequel transmet un mouvement introduit visant à déverrouiller l'appareil ou les appareils de verrouillage (90), **caractérisé en ce que** le siège de véhicule (1) comporte un premier élément de verrouillage réciproque qui, lorsque l'accessoire de positionnement de dossier (5) est déverrouillé, empêche un mouvement du levier de déverrouillage (30) visant à déverrouiller l'appareil de verrouillage (90), et qui, lorsque l'appareil de verrouillage (90) est déverrouillé, empêche un déverrouillage de l'accessoire de positionnement de dossier (5), le premier élément de verrouillage réciproque étant configuré sous la forme d'un levier de blocage (54) qui est raccordé de manière fixe à une tige de transmission (60) de façon à tourner avec celle-ci, un déverrouillage de l'accessoire de positionnement de dossier (5) ayant lieu au cours d'une rotation de la tige de transmission (60), et le levier de déverrouillage (30) comportant un élément de blocage (36, 37) ou interagissant avec un élément de blocage (36, 37) qui, lorsque l'appareil de verrouillage (90) est déverrouillé, empêche un mouvement du levier de blocage (54) visant à déverrouiller l'accessoire de positionnement de dossier (5).

2. Siège de véhicule réglable (1) selon la revendication 1, **caractérisé en ce que** deux accessoires de positionnement de dossier (5) sont prévus, et **en ce que** la tige de transmission (60) sert à déverrouiller simultanément les deux accessoires de positionnement de dossier (5).

3. Siège de véhicule réglable (1) selon l'une des revendications précédentes, **caractérisé en ce que**, lorsque l'accessoire de positionnement de dossier (5) est déverrouillé, le levier de blocage (54) empêche un mouvement de l'élément de blocage (36, 37) visant à déverrouiller l'appareil de verrouillage (90).

4. Siège de véhicule réglable (1) selon l'une des revendications précédentes, **caractérisé en ce que** le siège de véhicule (1) comporte un second élément de verrouillage réciproque (80) qui, lorsque le dossier (3) est approximativement à la verticale, empêche un mouvement du levier de déverrouillage (30) visant à déverrouiller l'appareil de verrouillage (90).

5. Siège de véhicule réglable (1) selon la revendication 4, **caractérisé en ce que**, lorsque le dossier (3) repose sur la partie assise (2), le second élément de verrouillage réciproque (80) permet un mouvement du levier de déverrouillage (30) visant à déverrouiller l'appareil de verrouillage (90), et ledit second élément de verrouillage réciproque, lorsque l'appareil de verrouillage (90) est déverrouillé, empêche un mouvement de pivotement du dossier (3) par rapport à la partie assise (2).

6. Siège de véhicule réglable (1) selon l'une ou l'autre des revendications 4 et 5, **caractérisé en ce que** le second élément de verrouillage réciproque (80) est configuré sous la forme d'un élément de passage (80) conçu de manière approximativement cylindrique qui est fixé à la partie assise (2) de telle sorte que son axe de cylindre soit aligné avec l'axe de pivotement de dossier (6).

7. Siège de véhicule réglable (1) selon la revendication 6, **caractérisé en ce que** l'élément de passage (80) comporte deux ouvertures de passage (81, 82) pour le passage de câbles Bowden (83, 84).

8. Siège de véhicule réglable (1) selon l'une ou l'autre des revendications 6 et 7, **caractérisé en ce que**, sur un côté d'extrémité, l'élément de passage (80) comporte une fente (78) s'étendant diamétralement qui, lorsque le dossier (3) repose sur la partie assise (2), est alignée avec une saillie de blocage (38) qui est attachée au levier de déverrouillage (30).

9. Siège de véhicule réglable (1) selon la revendication 8, **caractérisé en ce que**, lorsque l'appareil de verrouillage (90) est déverrouillé, la saillie de blocage (38) est placée à l'intérieur de la fente (78).

10. Siège de véhicule réglable (1) selon l'une des revendications précédentes, **caractérisé en ce qu'**au moins deux, de préférence précisément deux appareils de verrouillage (90) sont prévus.

11. Siège de véhicule réglable (1) selon l'une des revendications précédentes, **caractérisé en ce que** l'on peut faire pivoter le levier de déverrouillage (30) autour d'un axe de pivotement d'actionnement (44) qui s'étend perpendiculairement par rapport à l'axe de pivotement de dossier (6).

12. Siège de véhicule réglable (1) selon la revendication 8, **caractérisé en ce qu'**un ressort de rappel (61) sollicite le levier de déverrouillage (30) de manière constante dans la direction d'une position de repos, dans laquelle le levier de déverrouillage (30) se trouve lorsque l'appareil de verrouillage (90) est verrouillé.

13. Siège de véhicule réglable (1) selon l'une des revendications précédentes, **caractérisé en ce que** l'élément de blocage (36) est conçu sous la forme d'un bras de blocage (36) qui est configuré d'un seul tenant avec le levier de déverrouillage (30).

14. Siège de véhicule réglable (1) selon l'une des revendications 1 à 12, **caractérisé en ce que** l'élément de blocage (37) est conçu sous la forme d'un segment de blocage (37) qui est configuré séparément du levier de déverrouillage (30).

15. Siège de véhicule réglable (1) selon la revendication 14, **caractérisé en ce que** le segment de blocage (37) et le levier de déverrouillage (30) sont installés de telle sorte que l'on puisse les faire pivoter autour d'un axe de pivotement d'actionnement (44) identique.
